# EUROPÄISCHE PATENTSCHRIFT

(11) **EP 1 916 441 B1**
(45) Veröffentlichungstag und Bekanntmachung des Hinweises auf die Patenterteilung: **19.01.2011**
(21) Anmeldenummer: 07019402.2
(22) Anmeldetag: 04.10.2007
(51) Int. Cl.: F16F 15/131, F16F 15/139, F16D 67/00

(54) **Torsionsschwingungsdämpfer**
Torsion vibration damper
Amortisseur de vibrations de torsion

(30) Priorität: 26.10.2006 DE 102006050523; 14.05.2007 DE 102007022540; 14.05.2007 DE 102007022537; 18.05.2007 DE 102007023276
(43) Veröffentlichungstag der Anmeldung: 30.04.2008
(73) Patentinhaber: Schaeffler Technologies GmbH & Co. KG, 91074 Herzogenaurach (DE)
(72) Erfinder: Schumann, Lars, 77815 Bühl (DE)

(56) Entgegenhaltungen:
- DE-A1- 10 223 815
- DE-A1- 19 721 236
- DE-A1- 19 847 764
- US-A- 6 119 841

## Beschreibung

Die Erfindung betrifft einen Torsionsschwingungsdämpfer mit mindestens zwei entgegen der Wirkung einer Dämpfungseinrichtung mit in Umfangsrichtung wirkenden Energiespeichern zueinander verdrehbaren Teilen, von denen das eine mit einer Antriebsmaschine und das andere mit einer anzutreibenden Welle verbindbar ist, wobei zwischen den beiden Teilen zusätzlich ein mit der Dämpfungseinrichtung in Reihe geschalteter Drehmomentbegrenzer vorgesehen ist, der zumindest in eine der zwischen den beiden Teilen möglichen Relatiwerdrehrichtungen wirksam ist und mindestens eine Schlingenfederkupplung umfasst, die bei Erreichen eines vorbestimmten Verdrehwinkels zwischen den beiden Teilen als Freilauf wirkt und mindestens ein Schlingenfederelement umfasst.

Dokument US 6,119,841 A zeigt einen Torsionsschwingungsdämpfer, gemäβ dem Oberbegriff des Anspruchs 1.

Aufgabe der Erfindung ist es, einen Torsionsschwingungsdämpfer gemäß dem Oberbegriff des Anspruchs 1 zu schaffen, der eine hohe Lebensdauer aufweist und/oder kostengünstig herstellbar ist.

Die Aufgabe ist bei einem Torsionsschwingungsdämpfer mit mindestens zwei entgegen der Wirkung einer Dämpfungseinrichtung mit in Umfangsrichtung wirkenden Energiespeichern zueinander verdrehbaren Teilen, von denen das eine mit einer Antriebsmaschine und das andere mit einer anzutreibenden Welle verbindbar ist, wobei zwischen den beiden Teilen zusätzlich ein mit der Dämpfungseinrichtung in Reihe geschalteter Drehmomentbegrenzer vorgesehen ist, der zumindest in eine der zwischen den beiden Teilen möglichen Relativverdrehrichtungen wirksam ist und mindestens eine Schlingenfederkupplung umfasst, die bei Erreichen eines vorbestimmten Verdrehwinkels zwischen den beiden Teilen als Freilauf wirkt und mindestens ein Schlingenfederelement umfasst, dadurch gelöst, dass mindestens ein Ende des Schlingenfederelements drehfest mit einem Ringelement verbunden ist, das Abstützbereiche für die in Umfangsrichtung wirkenden Energiespeicher und/oder Ansteuerbereiche für die Freilaufwirkung aufweist. Das Ringelement kann zum Beispiel einstückig mit dem Schlingenfederelement verbunden sein. Das Ringelement kann auch formschlüssig und/oder mit Hilfe von Befestigungselementen an dem Schlingenfederelement befestigt sein. Das Ringelement dient dazu, Kräfte aufzunehmen und in das Schlingenfederelement einzuleiten. Das Ringelement kann stabiler ausgeführt werden als ansonsten zur Krafteinleitung verwendbare umgebogene Enden eines herkömmlichen Schlingenfederelements.

Ein bevorzugtes Ausführungsbeispiel des Torsionsschwingungsdämpfers ist dadurch gekennzeichnet, dass das Schlingenfederelement zwei Enden aufweist, die drehfest mit jeweils einem Ringelement verbunden sind, das Abstützbereiche für die in Umfangsrichtung wirkenden Energiespeicher und/oder Ansteuerbereiche für die Freilaufwirkung aufweist. Das Schlingenfederelement ist in axialer Richtung zwischen zwei Ringelementen angeordnet.

Ein weiteres bevorzugtes Ausführungsbeispiel des Torsionsschwingungsdämpfers ist dadurch gekennzeichnet, dass sich von dem Ringelement zwei Zungen radial nach innen erstrecken, die Abstützbereiche für die in Umfangsrichtung wirkenden Energiespeicher und/oder Ansteuerbereiche für die Freilaufwirkung aufweisen. Die Zungen können deutlich stabiler ausgeführt werden als umgebogene Enden eines herkömmlichen Schlingenfederelements.

Ein weiteres bevorzugtes Ausführungsbeispiel des Torsionsschwingungsdämpfers ist dadurch gekennzeichnet, dass die beiden Zungen diametral gegenüberliegend angeordnet sind und die Abstützbereiche für die in Umfangsrichtung wirkenden Energiespeicher und die Ansteuerbereiche für die Freilaufwirkung aufweisen. Gemäß einem wesentlichen Aspekt der Erfindung haben die um 180 Grad versetzt zueinander angeordneten Zungen eine Doppelfunktion.

Ein weiteres bevorzugtes Ausführungsbeispiel des Torsionsschwingungsdämpfers ist dadurch gekennzeichnet, dass das Ringelement formschlüssig mit dem zugehörigen Ende des Schlingenfederelements verbunden ist. Die formschlüssige Verbindung kann mit Hilfe von Befestigungselementen, wie Stiften, hergestellt werden.

Ein weiteres bevorzugtes Ausführungsbeispiel des Torsionsschwingungsdämpfers ist dadurch gekennzeichnet, dass das Ringelement mindestens zwei Löcher, insbesondere Durchgangslöcher, aufweist, in die jeweils ein Ende von Formschlusselementen eingreift, deren andere Enden in Löcher, insbesondere Durchgangslöcher, eingreifen, die in dem zugehörigen Ende des Schlingenfederelements vorgesehen sind. Dadurch wird auf einfache Art und Weise eine stabile Befestigung des Schlingenfederelements an dem Ringelement oder den Ringelementen ermöglicht.

Ein weiteres bevorzugtes Ausführungsbeispiel des Torsionsschwingungsdämpfers ist dadurch gekennzeichnet, dass das Ringelement einen geschlossenen Ringkörper aufweist. Vorzugsweise hat der Ringkörper einen rechteckigen Querschnitt. Von dem Ringkörper erstrecken sich die Zungen radial nach innen. Vorzugsweise sind die Zungen einstückig mit dem Ringkörper verbunden.

Ein weiteres bevorzugtes Ausführungsbeispiel des Torsionsschwingungsdämpfers ist dadurch gekennzeichnet, dass in radialer Richtung zwischen dem Schlingenfederelement und den in Umfangsrichtung wirkenden Energiespeichern mindestens eine Schale angeordnet ist. Die Schale dient unter anderem dazu, Fliehkräfte der in Umfangsrichtung wirkenden Energiespeicher abzustützen.

Ein weiteres bevorzugtes Ausführungsbeispiel des Torsionsschwingungsdämpfers ist dadurch gekennzeichnet, dass die Schale in Umfangsrichtung geteilt ist. Die Freiräume zwischen den Schalenteilen ermöglichen das Durchführen der sich von dem Ringelement radial nach innen erstreckenden Zungen. Darüber hinaus können die Enden der Schalenteile Anschläge für die Zungen darstellen, um den Lösewinkel zu reduzieren.

Ein weiteres bevorzugtes Ausführungsbeispiel des Torsionsschwingungsdämpfers ist dadurch gekennzeichnet, dass das Ringelement aus einem anderen Material als die Schlingenfeder gebildet ist. Durch eine geeignete Materialwahl ist es möglich, das Ringelement zur Krafteinleitung besonders stabil auszuführen. Es ist auch möglich, das Ringelement vor dem Verbinden mit dem Schlingenfederelement einer Wärmebehandlung zu unterziehen. Das Schlingenfederelement ist vorzugsweise aus Federstahl gebildet.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

Es zeigen:
- Figur 1: einen ersten Halbschnitt durch einen erfindungsgemäßen Torsionsschwin- gungsdämpfer;
- Figur 2: einen zweiten Halbschnitt des Torsionsschwingungsdämpfers aus Figur 1;
- Figur 3: eine perspektivische und teilweise aufgebrochene Darstellung des Torsions- schwingungsdämpfers aus den Figuren 1 und 2;
- Figur 4: eine perspektivische und teilweise aufgebrochene Darstellung eines drehfest mit zwei Ringelementen verbundenen Schlingenfederelements und
- Figur 5: einen Ausschnitt aus Figur 4 im Schnitt.

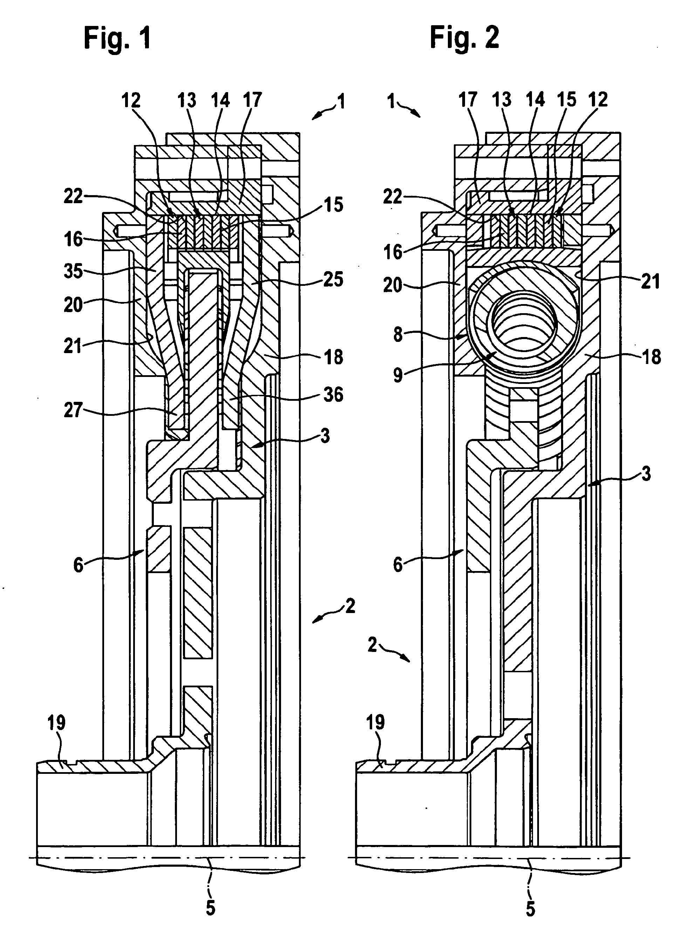

In den Figuren 1 bis 3 ist ein Torsionsschwingungsdämpfer 1, der als Zweimassenschwungrad 2 ausgeführt ist, in verschiedenen Ansichten dargestellt. Zweimassenschwungräder sind beispielsweise durch die deutschen Offenlegungsschriften DE 198 34 728 A1 und DE 41 17 584 A1 bekannt.

Das Zweimassenschwungrad 2 umfasst ein mit der Abtriebswelle eines Motors, wie der Kurbelwelle einer Brennkraftmaschine, verbindbares Primärschwungrad 3 und ein gegenüber diesem über eine Lagerung zur Drehachse 5 konzentrisch gelagertes Sekundärschwungrad 6. Das Sekundärschwungrad 6 kann eine Reibungskupplung aufnehmen. Zwischen der Druckplatte einer derartigen Reibungskupplung und der ein Bestandteil des Sekundärschwungrads 6 bildenden Gegendruckplatte können Reibbeläge einer Kupplungsscheibe eingespannt werden, wobei die Kupplungsscheibe mit einer Getriebeeingangswelle drehfest verbunden werden kann.

Zwischen dem Primärschwungrad 3 und dem Sekundärschwungrad 6 ist eine Dämpfungseinrichtung 8, die wenigstens einen drehelastischen Dämpfer 9 umfasst, vorgesehen. Der drehelastische Dämpfer 9 umfasst bei dem dargestellten Ausführungsbeispiel wenigstens zwei bogenartig ausgebildete Energiespeicher 10, 11, die jeweils aus mindestens einer Schraubendruckfeder aus Stahl bestehen können. Zur Bildung eines Energiespeichers 10, 11 können aber auch mehrere Schraubendruckfedern in Reihe hintereinander angeordnet werden, die entweder unmittelbar über Endwindungen sich aneinander abstützen oder aber unter Zwischenlegung von keilförmigen Zwischenelementen hintereinander geschaltet sind. Die einzelnen Federn können dabei, wie bereits erwähnt, bogenförmig ausgebildet sein oder aber auch bei einer entsprechend großen Anzahl von Federn jeweils eine im Wesentlichen gerade Gestalt besitzen. Solche Energiespeicher sind beispielsweise durch den bereits erwähnten Stand der Technik bekannt worden.

Die Dämpfungseinrichtung 8 beziehungsweise der drehelastische Dämpfer 9 ist in Reihe geschaltet mit einer Drehmomentbegrenzungseinrichtung 12, die hier als Freilaufeinrichtung 13 ausgeführt ist. Die Freilaufeinrichtung 13 ist als Schlingenfederkupplung 14 ausgeführt und umfasst wenigstens eine Schlingenfeder 15, die wenigstens eine, vorzugsweise wie dargestellt mehrere, axial hintereinander angeordnete Windungen 16 aufweist.

Bei dem in den Figuren 1 bis 5 dargestellten Ausführungsbeispiel besitzt die Schlingenfeder 15 eine Vielzahl von axial nebeneinander angeordneten und einstückig verbundenen Windungen 16. Der Begriff axial bezieht sich im Rahmen der vorliegenden Erfindung auf die Drehachse 5. Die Schlingenfeder 15 kann durch Wickeln eines im Querschnitt rechteckigen Drahtes beziehungsweise Flachbandes geführt werden. In vorteilhafter Weise kann jedoch eine derartige Schlingenfeder 15 auch aus einem hülsenförmigen Körper hergestellt werden, der in einzelne Windungen aufgeteilt wird, zum Beispiel mittels eines Aufspalt- beziehungsweise Auftrennwerkzeugs.

Durch entsprechende Beaufschlagung der Windungen 16 in Umfangsrichtung können diese tendenzmäßig im Sinne einer Durchmesservergrößerung oder Durchmesserverkleinerung verformt werden. Bei dem dargestellten Ausführungsbeispiel werden die Windungen 16 von einem ringförmigen beziehungsweise hülsenförmigen Bereich 17 umgriffen, der hier vom Primärschwungrad 3 getragen ist. Bei dem dargestellten Ausführungsbeispiel ist der hülsenförmige Bereich 17 mit einer Wandung 18 einstückig ausgebildet, die radial innen einen ringförmigen Ansatz 19 trägt, der zur Lagerung des Sekundärschwungrads 6 dient.

Am axialen Ende des ringförmigen Bereichs 17 ist eine radial nach innen weisende Wandung 20 befestigt, die zusammen mit der Wandung 18 und dem ringförmigen Bereich 17 eine ringartige Kammer 21 begrenzt, in der die Schlingenfederkupplung 14 und der drehelastische Dämpfer 9 aufgenommen sind. In vorteilhafter Weise kann in der Kammer 21 eine vorbestimmte Menge an viskosem Medium, wie zum Beispiel Fett oder Öl, vorgesehen sein.

Bei dem dargestellten Ausführungsbeispiel ist im Drehmomentfluss vom Antriebsmotor zu einem Getriebe betrachtet die Drehmomentbegrenzungseinrichtung 12 der Dämpfungseinrichtung 8 vorgeschaltet. Durch entsprechende kinematische Umkehrung kann die Drehmomentbegrenzungseinrichtung 12 der Dämpfungseinrichtung 8 jedoch auch nachgeschaltet werden.

Aus den Figuren 1 bis 3 ist erkennbar, dass bei einer Beaufschlagung der Windungen 16 im Sinne einer Durchmesservergrößerung diese sich radial an der Innenfläche 22 des ringförmigen Bereichs 17 abstützen. Die Abstützkraft ist dabei umso größer, je größer die in Umfangsrichtung auf die Windungen 16 einwirkende Kraft ist, welche die vorerwähnte Durchmesservergrößerung bewirkt. Aufgrund der zwischen den Windungen 16 und der Abstützfläche 22 vorhandenen Reibung kann das vom Antriebsmotor abgegebene Drehmoment übertragen werden.

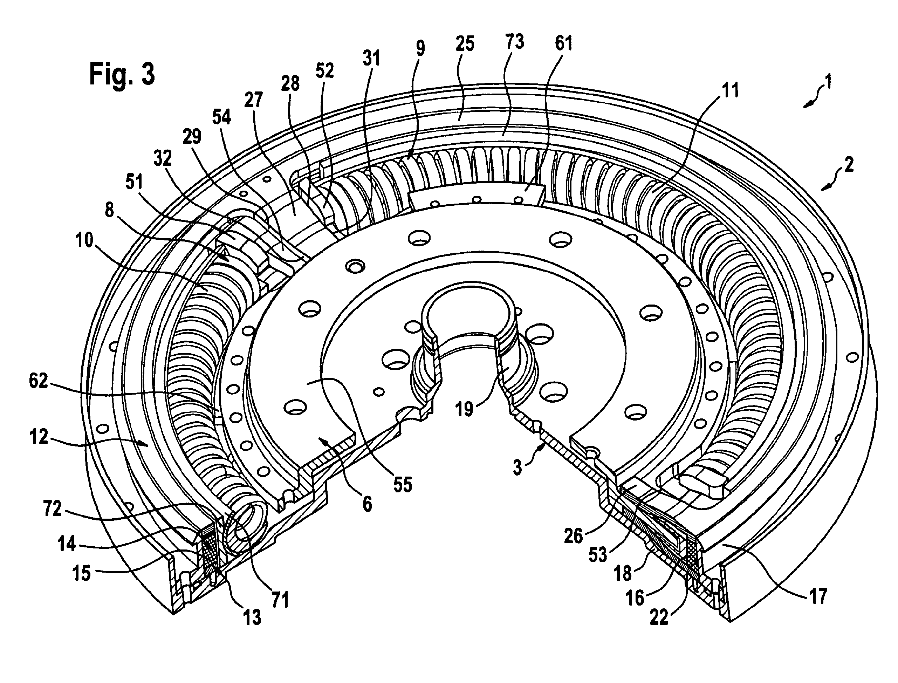

Die Verriegelung beziehungsweise Sperrung der als Freilaufeinrichtung 13 ausgebildeten Drehmomentbegrenzungseinrichtung 12 erfolgt mittels der Energiespeicher 10. Zur Krafteinleitung in die Schlingenfederkupplung 14 ist, wie man in Figur 3 sieht, gemäß einem wesentlichen Aspekt der Erfindung ein Ringelement 25 drehfest mit der Schlingenfeder 15 verbunden. Das Ringelement 25 hat im Wesentlichen die Gestalt einer Kreisringscheibe, vor der sich zwei Zungen 26, 27 radial nach innen erstrecken. Die beiden Zungen 26 und 27 sind um 180 Grad versetzt zueinander angeordnet, so das sie diametral gegenüberliegen. An den Zungen 26, 27 sind Abstütz- beziehungsweise Beaufschlagungsbereiche 28, 29 für die als Schraubendruckfedern ausgebildeten Energiespeicher 10, 11 vorgesehen. Radial innerhalb der Beaufschlagungsbereiche 28, 29 sind an den Zungen 26, 27 Ansteuerbereiche 31, 32 vorgesehen, die ab einem bestimmten Verdrehwinkel ein Lösen oder Durchrutschen der Schlingenfederkupplung 14 bewirken.

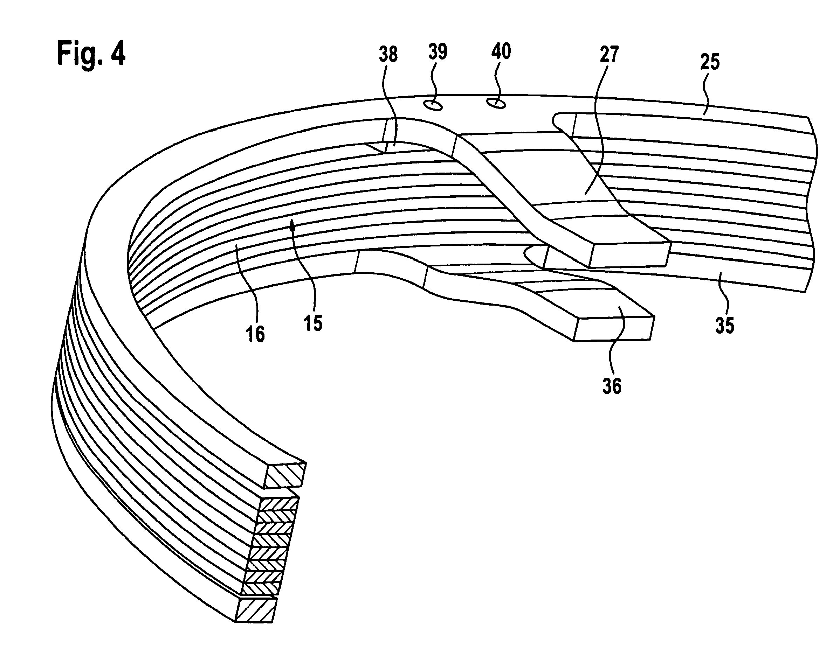

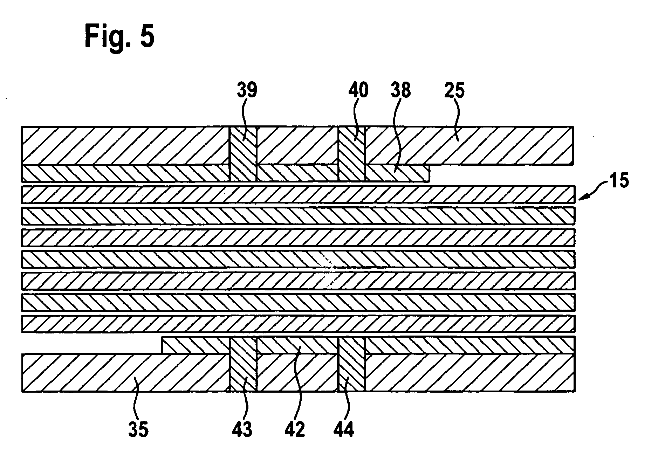

In den Figuren 4 und 5 sieht man, dass die Schlingenfeder 15 in axialer Richtung zwischen dem Ringelement 25 und einem weiteren Ringelement 35 angeordnet ist. Von dem Ringelement 35 erstrecken sich, wie bei dem Ringelement 25 zwei Zungen, von denen in Figur 4 nur eine Zunge 36 sichtbar ist, radial nach innen. Die einzelnen Zungen 36, 27 der Ringelemente 35, 25 überdecken sich in der Draufsicht. Ein Ende 38 der Schlingenfeder 15 ist mit Hilfe von Stiften 39, 40 an dem Ringelement 25 befestigt.

In Figur 5 sieht man, dass die Stifte 39, 40 in Durchgangslöchern angeordnet sind, die in dem Ende 38 der Schlingenfeder 15 und dem Ringelement 25 vorgesehen sind. Das entgegengesetzte Ende 42 der Schlingenfeder 15 ist in gleicher Weise mit Hilfe von Stiften 43, 44 an dem Ringelement 35 befestigt.

Zur Abstützung beziehungsweise Beaufschlagung der Energiespeicher 10 und 11 sind am Sekundärschwungrad 6 Abstützt- beziehungsweise Beaufschlagungsbereiche vorgesehen. Diese Abstütz- beziehungsweise Beaufschlagungsbereiche sind an Auslegern 53, 54 vorgesehen, die sich von einem flanschartigen Bauteil 55 radial nach außen erstrecken. Das flanschartige Bauteil 55 ist drehfest mit dem Sekundärschwungrad 6 verbunden oder Teil von diesem. Bezüglich der Verbindung zwischen dem flanschartigen Bauteil 55 und dem Sekundärschwungrad 6 wird beispielsweise auf die deutsche Offenlegungsschrift DE 103 59 635 A1 verwiesen. Falls erforderlich, kann jedoch zwischen dem flanschartigen Bauteil 55 und dem Sekundärschwungrad 6 eine weitere Dämpfungseinrichtung und/oder Drehmomentbegrenzungseinrichtung vorgesehen werden.

Die Tangentialkraft der Energiespeicher 10, 11, die auch als Bogenfedern bezeichnet werden, stützt sich über Stützschuhe 51, 52 an dem Ausleger 54 ab. An den Stützschuhen 51, 52 kommen die Beaufschlagungsbereiche 28, 29 der Zungen 27 zur Anlage. Dadurch wird erreicht, dass sich die Tangentialkraft der Bogenfedern 10, 11 über die Stützschuhe 51, 52 an dem Ringelement 25 abstützt. Das maximal übertragbare Drehmoment wird durch Löseausleger 61, 62 begrenzt, die sich von dem flanschartigen Bauteil 55 radial nach außen erstrecken. Wenn zum Beispiel der Ansteuerbereich 31 der Zunge 27 des Ringelements 25 an dem Löseausleger 61 zur Anlage kommt, dann öffnet die Schlingenfederkupplung 14 und wirkt als Freilauf.

Fliehkräfte der Bogenfedern 10, 11 werden über in Umfangsrichtung geteilte Schalen 71, 72, 73 direkt an der Schlingenfeder 15 abgestützt. Gemäß einem weiteren Aspekt der Erfindung wirkt die äußere Schale 72 im Lösefall der Schlingenfederkupplung 14 als Anlagefläche oder Anlagewelle für die Schlingenfeder 15. Die einander zugewandten Enden der äußeren geteilten Schalen 72, 73 bilden Anschlagflächen für die dazwischen angeordnete Zunge 27 des Ringelements 25. Somit verkleinern die äußeren Schaleteile 72, 73 den Lösewinkel. Als Lösewinkel wird der Winkel bezeichnet, um den die Ringelemente 25, 35 relativ zueinander verdreht werden müssen, bis das übertragbare Moment soweit reduziert ist, dass die Schlingenfederkupplung 14 öffnet beziehungsweise durchrutscht. Die Ringelemente 25, 35 wirken in Abhängigkeit von der Verdrehrichtung beziehungsweise der Krafteinleitung als Lösering oder als Sperrring. Bei einer Schub-Zug-Umkehr kehrt sich die Funktion der Ringe um, der Sperrring wird zum Lösering und der Lösering zum Sperrring.

Der Momentenfluss beim Lösen, das heißt einem Impactfall, verläuft von dem Löseausleger 61 an dem flanschartigen Bauteil 55 über die Zunge 27 des Löserings 25 radial durch den Bogenfederkanal nach außen auf den gesamten Lösering 25. Der Lösering 25 überträgt das Moment mittels der Stifte 39, 40 auf das zu lösende Schlingenfederende 38.

Die erfindungsgemäßen Ringelemente 25, 35, die als geschlossene Ringe ausgebildet sind, können unabhängig vom Bandquerschnitt der Schlingenfeder 15 beliebig gestaltet werden. Durch Verdrehen der Ringelemente 25, 35 zueinander wird in die Schlingenfederenden 38, 42 ein Moment eingeleitet und die Vorspannung der Schlingenfeder 15 gegen den hülsenförmigen Bereich 17 reduziert. Dadurch sinkt das übertragbare Moment zwischen der Schlingenfeder 15 und dem hülsenförmigen Bereich 17, so dass es zum Durchrutschen und somit zu einem gewollten Überlastschutz kommt.

### Bezugszeichenliste

- 1.: Torsionsschwingungsdämpfer
- 2.: Zweimassenschwungrad
- 3.: Primärschwungrad
- 5.: Drehachse
- 6.: Sekundärschwungrad
- 8.: Dämpfungseinrichtung
- 9.: Dämpfer
- 10.: Energiespeicher
- 11.: Energiespeicher
- 12.: Drehmomentbegrenzungseinrichtung
- 13.: Freilaufeinrichtung
- 14.: Schlingenfederkupplung
- 15.: Schlingenfeder
- 16.: Windungen
- 17.: hülsenförmiger Bereich
- 18.: Wandung
- 19.: ringförmiger Ansatz
- 20.: Wandung
- 21.: Kammer
- 22.: Innenfläche
- 25.: Ringelement
- 26.: Zunge
- 27.: Zunge
- 28.: Beaufschlagungsbereich
- 29.: Beaufschlagungsbereich
- 31.: Ansteuerbereich
- 32.: Ansteuerbereich
- 35.: Ringelement
- 36.: Zunge
- 38.: Ende

- 39.: Stift
- 40.: Stift
- 42.: Ende
- 43.: Stift
- 44.: Stift
- 51.: Stützschuh
- 52.: Stützschuh
- 53.: Ausleger
- 54.: Ausleger
- 55.: flanschartiges Bauteil
- 61.: Löseausleger
- 62.: Löseausleger
- 71.: geteilte Schale
- 72.: geteilte Schale
- 73.: geteilte Schale

## Patentansprüche

1. Torsionsschwingungsdämpfer mit mindestens zwei entgegen der Wirkung einer Dämpfungseinrichtung (8) mit in Umfangsrichtung wirkenden Energiespeichern (10,11) zueinander verdrehbaren Teilen (3,6), von denen das eine mit einer Antriebsmaschine und das andere mit einer anzutreibenden Welle verbindbar ist, wobei zwischen den beiden Teilen (3,6) zusätzlich ein mit der Dämpfungseinrichtung (8) in Reihe geschalteter Drehmomentbegrenzer (12) vorgesehen ist, der zumindest in eine der zwischen den beiden Teilen (3,6) möglichen Relatiwerdrehrichtungen wirksam ist und mindestens eine Schlingenfederkupplung (14) umfasst, die bei Erreichen eines vorbestimmten Verdrehwinkels zwischen den beiden Teilen (3,6) als Freilauf wirkt und mindestens ein Schlingenfederelement (15) umfasst, **dadurch gekennzeichnet, dass** mindestens ein Ende des Schlingenfederelements (15) drehfest mit einem Ringelement (25;35) verbunden ist, das Abstützbereiche (28,29) für die in Umfangsrichtung wirkenden Energiespeicher (10,11) und/oder Ansteuerbereiche (31,32) für die Freilaufwirkung aufweist.

2. Torsionsschwingungsdämpfer nach Anspruch 1, **dadurch gekennzeichnet, dass** das Schlingenfederelement (15) zwei Enden (38,42) aufweist, die drehfest mit jeweils einem Ringelement (25,35) verbunden sind, das Abstützbereiche (28,29) für die in Umfangsrichtung wirkenden Energiespeicher (10,11) und/oder Ansteuerbereiche (31,32) für die Freilaufwirkung aufweist.

3. Torsionsschwingungsdämpfer nach einem der vorhergehenden Ansprüche, **dadurch gekennzeichnet, dass** sich von dem Ringelement (25,35) zwei Zungen (26,27) radial nach innen erstrecken, die Abstützbereiche (28,29) für die in Umfangsrichtung wirkenden Energiespeicher (10,11) und/oder Ansteuerbereiche (31,32) für die Freilaufwirkung aufweisen.

4. Torsionsschwingungsdämpfer nach Anspruch 3, **dadurch gekennzeichnet, dass** die beiden Zungen (26,27) diametral gegenüberliegend angeordnet sind und die Abstützbereiche (28,29) für die in Umfangsrichtung wirkenden Energiespeicher (10,11) und die Ansteuerbereiche (31,32) für die Freilaufwirkung aufweisen.

5. Torsionsschwingungsdämpfer nach einem der vorhergehenden Ansprüche, **dadurch gekennzeichnet, dass** das Ringelement (25,35) formschlüssig mit dem zugehörigen Ende (38,42) des Schlingenfederelements (15) verbunden ist.

6. Torsionsschwingungsdämpfer nach einem der vorhergehenden Ansprüche, **dadurch gekennzeichnet, dass** das Ringelement (25,35) mindestens zwei Löcher, insbesondere Durchgangslöcher, aufweist, in die jeweils ein Ende von Formschlusselementen (39,40;43,44) eingreift, deren andere Enden in Löcher, insbesondere Durchgangslöcher, eingreifen, die in dem zugehörigen Ende (38,42) des Schlingenfederelements (15) vorgesehen sind.

7. Torsionsschwingungsdämpfer nach einem der vorhergehenden Ansprüche, **dadurch gekennzeichnet, dass** das Ringelement (25,35) einen geschlossenen Ringkörper aufweist.

8. Torsionsschwingungsdämpfer nach einem der vorhergehenden Ansprüche, **dadurch gekennzeichnet, dass** in radialer Richtung zwischen dem Schlingenfederelement (15) und den in Umfangsrichtung wirkenden Energiespeichern (10,11) mindestens eine Schale (71,72) angeordnet ist.

9. Torsionsschwingungsdämpfer nach Anspruch 8, **dadurch gekennzeichnet, dass** die Schale (71,72) in Umfangsrichtung geteilt ist.

10. Torsionsschwingungsdämpfer nach einem der vorhergehenden Ansprüche, **dadurch gekennzeichnet, dass** das Ringelement (25,35) aus einem anderen Material als die Schlingenfeder (15) gebildet ist.

## Claims

1. Torsional vibration damper, with at least two parts (3, 6) which are rotatable with respect to one another counter to the action of a damping device (8) having energy accumulators (10, 11) acting in the circumferential direction and of which one is connectable to an engine and the other to a shaft to be driven, there being additionally provided between the two parts (3, 6) a torque limiter (12) which is connected in series with the damping device (8) and which is active at least in one of the directions of relative rotation possible between the two parts (3, 6) and comprises at least one loop spring coupling (14) which acts as a freewheel when a predetermined angle of rotation is reached between the two parts (3, 6) and which comprises at least one loop spring element (15), **characterized in that** at least one end of the loop spring element (15) is connected fixedly by means of rotation to a ring element (25; 35) which has supporting regions (28, 29) for the energy accumulators (10, 11) acting in the circumferential direction and/or activation regions (31, 32) for the freewheel action.

2. Torsional vibration damper according to Claim 1, **characterized in that** the loop spring element (15) has two ends (38, 42) which are connected fixedly by means of rotation in each case to a ring element (25, 35) which has supporting regions (28, 29) for the energy accumulators (10, 11) acting in the circumferential direction and/or activation regions (31, 32) for the freewheel action.

3. Torsional vibration damper according to one of the preceding claims, **characterized in that** two tongues (26, 27) extend radially inwards from the ring element (25, 35) and have supporting regions (28, 29) for the energy accumulators (10, 11) acting in the circumferential direction and/or activation regions (31, 32) for the freewheel action.

4. Torsional vibration damper according to Claim 3, **characterized in that** the two tongues (26, 27) are arranged diametrically opposite one another and have the supporting regions (28, 29) for the energy accumulators (10, 11) acting in the circumferential direction and the activation regions (31, 32) for the freewheel action.

5. Torsional vibration damper according to one of the preceding claims, **characterized in that** the ring element (25, 35) is connected positively to the associated end (38, 42) of the loop spring element (15).

6. Torsional vibration damper according to one of the preceding claims, **characterized in that** the ring element (25, 35) has at least two holes, in particular through-holes, into which engages in each case one end of positive connection elements (39, 40; 43, 44), the other ends of which engage into holes, in particular through-holes, which are provided in the associated end (38, 42) of the loop spring element (15).

7. Torsional vibration damper according to one of the preceding claims, **characterized in that** the ring element (25, 35) has a closed ring body.

8. Torsional vibration damper according to one of the preceding claims, **characterized in that** at least one shell (71, 72) is arranged in the radial direction between the loop spring element (15) and the energy accumulators (10, 11) acting in the circumferential direction.

9. Torsional vibration damper according to Claim 8, **characterized in that** the shell (71, 72) is divided in the circumferential direction.

10. Torsional vibration damper according to one of the preceding claims, **characterized in that** the ring element (25, 35) is formed from a material other than that of the loop spring (15).

## Revendications

1. Amortisseur de vibrations de torsion comprenant au moins deux parties (3, 6) pouvant tourner l'une par rapport à l'autre à l'encontre de l'effet d'un dispositif d'amortissement (8) avec des accumulateurs d'énergie (10, 11) agissant dans la direction périphérique, dont l'une peut être connectée à une machine d'entraînement et l'autre à un arbre à entraîner, un limiteur de couple (12) monté en série avec le dispositif d'amortissement (8) étant en outre prévu entre les deux parties (3, 6), agissant au moins dans l'une des directions de rotation relatives possibles entre les deux parties (3, 6) et comprenant au moins un accouplement à ressort en boucle (14) qui, lorsqu'un angle de rotation prédéterminé entre les deux parties (3, 6) est atteint, agit en tant que roue libre et comprend au moins un élément de ressort en boucle (15), **caractérisé en ce qu'**au moins une extrémité de l'élément de ressort en boucle (15) est connectée de manière solidaire en rotation à un élément annulaire (25 ; 35) qui présente des régions de support (28, 29) pour les accumulateurs d'énergie (10, 11) agissant dans la direction périphérique et/ou des régions de commande (31, 32) pour l'effet de roue libre.

2. Amortisseur de vibrations de torsion selon la revendication 1, **caractérisé en ce que** l'élément de ressort en boucle (15) présente deux extrémités (38, 42) qui sont connectées de manière solidaire en rotation à un élément annulaire respectif (25, 35) qui présente des régions de support (28, 29) pour les accumulateurs d'énergie (10, 11) agissant dans la direction périphérique et/ou des régions de commande (31, 32) pour l'effet de roue libre.

3. Amortisseur de vibrations de torsion selon l'une quelconque des revendications précédentes, **caractérisé en ce que** deux langues (26, 27) s'étendent radialement vers l'intérieur depuis l'élément annulaire (25, 35), et présentent des régions de support (28, 29) pour les accumulateurs d'énergie (10, 11) agissant dans la direction périphérique et/ou des régions de commande (31, 32) pour l'effet de roue libre.

4. Amortisseur de vibrations de torsion selon la revendication 3, **caractérisé en ce que** les deux langues (26, 27) sont disposées de manière diamétralement opposée et présentent les régions de support (28, 29) pour les accumulateurs d'énergie (10, 11) agissant dans la direction périphérique et les régions de commande (31, 32) pour l'effet de roue libre.

5. Amortisseur de vibrations de torsion selon l'une quelconque des revendications précédentes, **caractérisé en ce que** l'élément annulaire (25, 35) est connecté par engagement par coopération de formes avec l'extrémité associée (38, 42) de l'élément de ressort en boucle (15).

6. Amortisseur de vibrations de torsion selon l'une quelconque des revendications précédentes, **caractérisé en ce que** l'élément annulaire (25, 35) présente au moins deux orifices, en particulier des orifices traversants dans lesquels à chaque fois une extrémité d'éléments d'engagement par coopération de formes (39, 40 ; 43, 44) vient en prise, et dont les autres extrémités viennent en prise dans des orifices, en particulier des orifices traversants, qui sont prévus dans l'extrémité associée (38, 42) de l'élément de ressort en boucle (15).

7. Amortisseur de vibrations de torsion selon l'une quelconque des revendications précédentes, **caractérisé en ce que** l'élément annulaire (25, 35) présente un corps annulaire fermé.

8. Amortisseur de vibrations de torsion selon l'une quelconque des revendications précédentes, **caractérisé en ce qu'**au moins une coque (71, 72) est disposée dans la direction radiale entre l'élément de ressort en boucle (15) et les accumulateurs d'énergie (10, 11) agissant dans la direction périphérique.

9. Amortisseur de vibrations de torsion selon la revendication 8, **caractérisé en ce que** la coque (71, 72) est divisée dans la direction périphérique.

10. Amortisseur de vibrations de torsion selon l'une quelconque des revendications précédentes, **caractérisé en ce que** l'élément annulaire (25, 35) est formé d'un autre matériau que celui du ressort en boucle (15).
